# EUROPÄISCHE PATENTSCHRIFT

(11) **EP 3 654 121 B1**
(45) Veröffentlichungstag und Bekanntmachung des Hinweises auf die Patenterteilung: **09.06.2021**
(21) Anmeldenummer: 18206328.9
(22) Anmeldetag: 14.11.2018
(51) Int. Cl.: G05B 19/042

(54) **REDUNDANTES AUTOMATISIERUNGSSYSTEM MIT MEHREREN PROZESSOREINHEITEN JE HARDWAREEINHEIT**
REDUNDANT AUTOMATION SYSTEM WITH A PLURALITY OF PROCESSING UNITS FOR EACH HARDWARE UNIT
SYSTÈME D'AUTOMATISATION REDONDANT POURVU D'UNE PLURALITÉ D'UNITÉS DE PROCESSEUR PAR UNITÉ MATÉRIELLE

(43) Veröffentlichungstag der Anmeldung: 20.05.2020
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(56) Entgegenhaltungen:
- EP-A1- 2 657 797
- EP-A1- 3 002 682
- EP-A1- 3 316 052

## Beschreibung

Die vorliegende Erfindung geht aus von einem Betriebsverfahren für ein redundantes Automatisierungssystem, das zumindest eine erste und eine zweite Hardwareeinheit umfasst, wobei die erste und die zweite Hardwareeinheit jeweils zumindest eine erste Prozessoreinheit umfassen,
- wobei die erste Prozessoreinheit der ersten Hardwareeinheit eine erste Gruppe von Tasks ausführt,
- wobei die erste Prozessoreinheit der zweiten Hardwareeinheit eine zweite Gruppe von Tasks ausführt,
- wobei die Tasks der ersten und der zweiten Gruppe von einem gesteuerten industriellen Prozess direkt oder indirekt die gleichen Eingangssignale entgegennehmen und die gleichen Ausgangssignale für den gesteuerten industriellen Prozess ermitteln, jedoch nur entweder die Tasks der ersten Gruppe oder die Tasks der zweiten Gruppe ihre Ausgangssignale an den gesteuerten industriellen Prozess ausgeben,
- wobei bei einem Ausfall der ersten Hardwareeinheit stets die Tasks der zweiten Gruppe ihre Ausgangssignale an den gesteuerten industriellen Prozess ausgeben und bei einem Ausfall der zweiten Hardwareeinheit stets die Tasks der ersten Gruppe ihre Ausgangssignale an den gesteuerten industriellen Prozess ausgeben,
- wobei die Tasks der ersten und der zweiten Gruppe sich über eine erste Kommunikationsverbindung miteinander synchronisieren.

Die vorliegende Erfindung geht weiterhin aus von einem redundanten Automatisierungssystem, das zumindest eine erste und eine zweite Hardwareeinheit umfasst, wobei die erste und die zweite Hardwareeinheit jeweils zumindest eine erste Prozessoreinheit umfassen,
- wobei die erste Hardwareeinheit dazu ausgebildet ist, mittels ihrer ersten Prozessoreinheit eine erste Gruppe von Tasks auszuführen,
- wobei die zweite Hardwareeinheit dazu ausgebildet ist, mittels ihrer ersten Prozessoreinheit eine zweite Gruppe von Tasks auszuführen,
- wobei die Tasks der ersten und der zweiten Gruppe von einem gesteuerten industriellen Prozess direkt oder indirekt die gleichen Eingangssignale entgegennehmen und die gleichen Ausgangssignale für den gesteuerten industriellen Prozess ermitteln und für den gesteuerten industriellen Prozess bereitstellen,
- wobei das redundante Automatisierungssystem eine erste Kommunikationsverbindung umfasst, über die sich die Tasks der ersten und der zweiten Gruppe miteinander synchronisieren.

Ein derartiges Betriebsverfahren und das zugehörige Automatisierungssystem sind aus der EP 2 657 797 A1 und auch aus der EP 2 667 269 A1 bekannt.

Die EP 3 002 682 A1 zeigt ein Betriebsverfahren für ein redundantes Automatisierungssystem mit zwei Controllern mit jeweils zwei Kernen. Zum Extrahieren von Zustandsinformationen der aktiven Steuerung wird von der Verarbeitungseinheit der aktiven Steuerung eine Softwareanwendung unter Verwendung eines zweiten Prozessorkerns ausgeführt. Die Zustandsinformationen werden zwischen Steuerungen über ein Kommunikationsmedium weitergegeben. Die synchronisationsbezogenen Aufgaben (state pump) werden dabei jeweils in dedizierten Kernen der Verarbeitungseinheit ausgeführt.

In Automatisierungssystemen sind in vielen Fällen hochverfügbare Lösungen (sogenannte H-Systeme) gefordert. H-Systeme zeichnen sich dadurch aus, dass ein und dieselbe Automatisierungsaufgabe redundant auf mehreren verschiedenen Hardwareeinheiten ausgeführt wird, jedoch nur die Ausgangssignale einer der Hardwareeinheiten tatsächlich zur Steuerung des industriellen Prozesses verwendet werden. Dadurch ist es möglich, dass bei Ausfall der zur Steuerung des industriellen Prozesses verwendeten Hardwareeinheit die andere Hardwareeinheit verzögerungsfrei oder zumindest nahezu verzögerungsfrei die Steuerung des Prozesses übernimmt.

Um auch tatsächlich die Steuerung des industriellen Prozesses verzögerungsfrei oder zumindest nahezu verzögerungsfrei übernehmen zu können, ist zum einen eine Synchronisierung der Hardwareeinheiten, welche jeweils die Automatisierungsaufgabe abarbeiten, erforderlich. Hierbei muss gewährleistet sein, dass die Hardwareeinheiten mit den gleichen Daten arbeiten und die gleichen Daten auf die gleiche Art und Weise verarbeiten. Weiterhin muss es nach einem Ausfall und einer späteren Reparatur oder Ersetzung einer der Hardwareeinheiten möglich sein, die reparierte bzw. ersetzte Hardwareeinheit wieder an die den Prozess steuernde Hardwareeinheit heranzuführen und mit ihr zu synchronisieren. Hierfür finden sich Lösungen in den beiden oben genannten EP-Schriften.

Die in den beiden EP-Schriften aufgezeigten Lösungen sind für Hardwareeinheiten bestimmt, die jeweils nur eine einzige Prozessoreinheit aufweisen. Auch in der Automatisierungstechnik setzt sich jedoch immer mehr die Verwendung von Hardwareeinheiten durch, die mehrere Prozessoren oder mehrere Prozessorkerne aufweisen, also zumindest eine erste und eine zweite Prozessoreinheit. Die Nutzung von mehreren Prozessoreinheiten ist, soweit die Synchronisierung der Prozessoreinheiten von Hardwareeinheit zu Hardwareeinheit erforderlich ist, jedoch nur eingeschränkt möglich. Insbesondere der Leistungsvorteil, den Mehrkernprozessoren bieten, kann nicht oder zumindest nur teilweise genutzt werden. Darüber hinaus ergibt sich bei der Nutzung der in den oben genannten EP-Schriften genannten Vorgehensweisen die Problematik, dass die unterschiedlichen Tasks des Systems in gleicher Art und Weise mit Unterbrechungspunkten versehen werden müssen. Dies ist insbesondere dann schwierig, wenn Programmteile genutzt werden, die aus Software-Bibliotheken stammen und damit nicht veränderbar sind oder zumindest nicht verändert werden sollen.

Im Stand der Technik bestimmt diejenige Task, bei welcher der zeitliche Abstand der Unterbrechungspunkte am größten ist, die Reaktionsfähigkeit des Systems, und damit insbesondere auch die Reaktionsfähigkeit der Prozesssteuerung. Dieses Problem kann im Stand der Technik nur durch ein aufwändiges Versehen aller Software-Komponenten mit einer Vielzahl von Unterbrechungspunkten gelöst werden. Dies führt jedoch zu einer Verlängerung der Reaktionszeiten.

Es ist möglich, die verschiedenen Tasks, die der Automatisierungsaufgabe zugrunde liegen, auf die verschiedenen Prozessoreinheiten (Prozessoren oder Prozessorkerne) der Hardwareeinheiten aufzuteilen. Dies führt direkt und unmittelbar jedoch nur dann zu einer sinnvollen Lösung, wenn entweder die Tasks nur mit lokalen Daten arbeiten oder die Daten zwar global sind, zwischen den Tasks, die mittels einer der Prozessoreinheiten ausgeführt werden, und den Tasks, die mittels einer anderen der Prozessoreinheiten ausgeführt werden, jedoch kein Datenaustausch erforderlich ist. In diesem Fall - wenn also die erste und die zweite Hardwareeinheit zusätzlich zur jeweiligen ersten Prozessoreinheit jeweils zumindest auch eine zweite Prozessoreinheit umfassen - ist es möglich, die bekannten Vorgehensweisen dadurch weiterzubilden,
- dass die zweite Prozessoreinheit der ersten Hardwareeinheit eine dritte Gruppe von Tasks ausführt,
- dass die zweite Prozessoreinheit der ersten Hardwareeinheit eine vierte Gruppe von Tasks ausführt,
- dass die Tasks der dritten und der vierten Gruppe von dem gesteuerten industriellen Prozess direkt oder indirekt die gleichen Eingangssignale entgegennehmen und die gleichen Ausgangssignale für den gesteuerten industriellen Prozess ermitteln, jedoch nur entweder die Tasks der dritten Gruppe oder die Tasks der vierten Gruppe ihre Ausgangssignale an den gesteuerten industriellen Prozess ausgeben,
- dass bei einem Ausfall der ersten Hardwareeinheit weiterhin auch stets die Tasks der vierten Gruppe ihre Ausgangssignale an den gesteuerten industriellen Prozess ausgeben und bei einem Ausfall der zweiten Hardwareeinheit weiterhin auch stets die Tasks der dritten Gruppe ihre Ausgangssignale an den gesteuerten industriellen Prozess ausgeben und
- dass die Tasks der dritten und der vierten Gruppe sich über eine zweite Kommunikationsverbindung miteinander synchronisieren.

In diesem Fall werden also die aus den EP-Schriften bekannten Vorgehensweisen separat zwischen korrespondierenden Gruppen von Tasks ausgeführt.

Wie bereits erwähnt, dürfen in diesem Fall jedoch keine von der ersten Prozessoreinheit der jeweiligen Hardwareeinheit verwendeten Daten auch von der zweiten Prozessoreinheiten der jeweiligen Hardwareeinheit verwendet werden. Insbesondere würde ein derartiger Zugriff zum Verlust der Pfadsynchronizität führen.

Die Aufgabe der vorliegenden Erfindung besteht darin, Möglichkeiten zu schaffen, mittels derer auch bei Hardwareeinheiten mit mehreren Prozessoreinheiten auf einfache Weise eine Verteilung der Tasks einer Automatisierungsaufgabe auf die Prozessoreinheiten der Hardwareeinheiten möglich ist.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird in dem Fall, dass die erste und die zweite Hardwareeinheit jeweils zumindest auch eine zweite Prozessoreinheit umfassen, ein Betriebsverfahren der eingangs genannten Art dadurch ausgestaltet,
- dass die zweite Prozessoreinheit der ersten Hardwareeinheit eine dritte Gruppe von Tasks ausführt,
- dass die zweite Prozessoreinheit der zweiten Hardwareeinheit eine vierte Gruppe von Tasks ausführt,
- dass die Tasks der dritten und der vierten Gruppe von dem gesteuerten industriellen Prozess direkt oder indirekt die gleichen Eingangssignale entgegennehmen und die gleichen Ausgangssignale für den gesteuerten industriellen Prozess ermitteln, jedoch nur entweder die Tasks der dritten Gruppe oder die Tasks der vierten Gruppe ihre Ausgangssignale an den gesteuerten industriellen Prozess ausgeben,
- dass bei einem Ausfall der ersten Hardwareeinheit weiterhin auch stets die Tasks der vierten Gruppe ihre Ausgangssignale an den gesteuerten industriellen Prozess ausgeben und bei einem Ausfall der zweiten Hardwareeinheit weiterhin auch stets die Tasks der dritten Gruppe ihre Ausgangssignale an den gesteuerten industriellen Prozess ausgeben,
- dass die Tasks der dritten und der vierten Gruppe sich über eine zweite Kommunikationsverbindung miteinander synchronisieren,
- dass die Tasks der ersten Gruppe Daten in einen ersten Zwischenspeicher der ersten Hardwareeinheit einspeichern und die Tasks der dritten Gruppe die in den ersten Zwischenspeicher der ersten Hardwareeinheit eingespeicherten Daten aus dem ersten Zwischenspeicher der ersten Hardwareeinheit auslesen,
- dass die Tasks der dritten Gruppe Daten in einen zweiten Zwischenspeicher der ersten Hardwareeinheit einspeichern und die Tasks der ersten Gruppe die in den zweiten Zwischenspeicher der ersten Hardwareeinheit eingespeicherten Daten aus dem zweiten Zwischenspeicher der ersten Hardwareeinheit auslesen,
- dass die Tasks der zweiten Gruppe Daten in einen ersten Zwischenspeicher der zweiten Hardwareeinheit einspeichern und die Tasks der vierten Gruppe die in den ersten Zwischenspeicher der zweiten Hardwareeinheit eingespeicherten Daten aus dem ersten Zwischenspeicher der zweiten Hardwareeinheit auslesen und
- dass die Tasks der vierten Gruppe Daten in einen zweiten Zwischenspeicher der zweiten Hardwareeinheit einspeichern und die Tasks der zweiten Gruppe die in den zweiten Zwischenspeicher der zweiten Hardwareeinheit eingespeicherten Daten aus dem zweiten Zwischenspeicher der zweiten Hardwareeinheit auslesen.

Es wird also einerseits über die Kommunikationsverbindungen eine Synchronisierung der auf der einen Hardwareeinheit ablaufenden Gruppen von Tasks mit den auf der anderen Hardwareeinheit ablaufenden Gruppen von Tasks erreicht. Andererseits wird durch die Zwischenspeicher erreicht, dass die von jeweils einer der Prozessoreinheiten einer der Hardwareeinheiten ausgeführten Tasks einerseits mit lokalen Daten arbeiten, aber dennoch Informationen mit denjenigen Tasks austauschen können, die von den anderen Prozessoreinheiten der jeweiligen Hardwareeinheit ausgeführt werden.

In einer bevorzugten Ausgestaltung sind die Zwischenspeicher der Hardwareeinheiten als FIFO-Speicher ausgebildet. Derartige Zwischenspeicher gewährleisten insbesondere, dass die ältesten eingeschriebenen Daten zuerst wieder ausgelesen werden. Auch andere Zwischenspeicher sind möglich, insbesondere Zwischenspeicher, bei denen eine Priorisierung von Elementen möglich ist. Es muss bei allen Ausgestaltungen beachtet werden, dass der jeweilige Zwischenspeicher nicht voll wird und überläuft.

In einer weiterhin bevorzugten Ausgestaltung ist vorgesehen, dass die Tasks der ersten bis vierten Gruppe in dem Fall, dass von ihnen auszulesende Daten noch nicht in den jeweiligen Zwischenspeicher der jeweiligen Hardwareeinheit eingespeichert sind, das Einspeichern abwarten. Dadurch kann auf einfache Weise auch die Pfadsynchronizität zwischen den Gruppen von Tasks, die von den Prozessoreinheiten derselben Hardwareeinheit ausgeführt werden, gewährleistet werden.

Es ist möglich, dass für den Fall, dass weder die erste noch die zweite Hardwareeinheit ausfallen, die Festlegung, welche Tasks ihre Ausgangssignale an den gesteuerten industriellen Prozess ausgeben, statisch beibehalten wird. Diese Ausgestaltung ist besonders einfach realisierbar.

Vorzugsweise geben in diesem Fall entweder die Tasks der ersten und der vierten Gruppe oder die Tasks der zweiten und der dritten Gruppe ihre Ausgangssignale an den gesteuerten industriellen Prozess aus. Dadurch können die Kommunikationsverbindungen zwischen den Hardwareeinheiten trotz der statischen Festlegung, welche Tasks ihre Ausgangssignale an den gesteuerten industriellen Prozess ausgeben, besonders effizient genutzt werden.

Alternativ ist es möglich, dass erfasst wird, in welchem Ausmaß Daten von der ersten Hardwareeinheit zur zweiten Hardwareeinheit übermittelt werden und in welchem Ausmaß Daten von der zweiten Hardwareeinheit zur ersten Hardwareeinheit übermittelt werden. In diesem Fall kann unter Berücksichtigung der erfassten Ausmaße dynamisch bestimmt werden, welche der Tasks ihre Ausgangssignale an den gesteuerten industriellen Prozess ausgeben.

Die erste Kommunikationsverbindung und die zweite Kommunikationsverbindung können insbesondere als getrennte Streams oder als einheitlicher Stream ausgebildet sein. Es ist weiterhin möglich, dass die erste und die zweite Kommunikationsverbindung physikalisch voneinander verschiedene Kommunikationsverbindungen sind. In der Regel handelt es sich jedoch nur um eine logische Unterscheidung der beiden Kommunikationsverbindungen.

Die Aufgabe wird weiterhin durch ein redundantes Automatisierungssystem mit den Merkmalen des Anspruchs 8 gelöst. Vorteilhafte Ausgestaltungen des Automatisierungssystems sind Gegenstand der abhängigen Ansprüche 9 bis 12.

Erfindungsgemäß wird in dem Fall, dass die erste und die zweite Hardwareeinheit jeweils zumindest auch eine zweite Prozessoreinheit umfassen, ein Automatisierungssystem der eingangs genannten Art dadurch ausgestaltet,
- dass die erste Hardwareeinheit dazu ausgebildet ist, mittels ihrer zweiten Prozessoreinheit eine dritte Gruppe von Tasks auszuführen,
- dass die zweite Hardwareeinheit dazu ausgebildet ist, mittels ihrer zweiten Prozessoreinheit eine vierte Gruppe von Tasks auszuführen,
- dass die Tasks der dritten und der vierten Gruppe von dem gesteuerten industriellen Prozess direkt oder indirekt die gleichen Eingangssignale entgegennehmen und die gleichen Ausgangssignale für den gesteuerten industriellen Prozess ermitteln und für den gesteuerten industriellen Prozess bereitstellen,
- dass das redundante Automatisierungssystem auch eine zweite Kommunikationsverbindung umfasst, über die sich die Tasks der dritten und der vierten Gruppe miteinander synchronisieren,
- dass die erste Hardwareeinheit einen ersten Zwischenspeicher aufweist, in den die Tasks der ersten Gruppe Daten einspeichern und aus dem die Tasks der dritten Gruppe die dort eingespeicherten Daten auslesen,
- dass die erste Hardwareeinheit einen zweiten Zwischenspeicher aufweist, in den die Tasks der dritten Gruppe Daten einspeichern und aus dem die Tasks der ersten Gruppe die dort eingespeicherten Daten auslesen,
- dass die zweite Hardwareeinheit einen ersten Zwischenspeicher aufweist, in den die Tasks der zweiten Gruppe Daten einspeichern und aus dem die Tasks der vierten Gruppe die dort eingespeicherten Daten auslesen, und
- dass die zweite Hardwareeinheit einen zweiten Zwischenspeicher aufweist, in den die Tasks der vierten Gruppe Daten einspeichern und aus dem die Tasks der zweiten Gruppe die dort eingespeicherten Daten auslesen.

Die dadurch erreichten Wirkungen und Vorteile korrespondieren mit denen des Betriebsverfahrens.

Die vorteilhaften Ausgestaltungen des Automatisierungssystems korrespondieren ebenfalls mit denen des Betriebsverfahrens. Auch die hierdurch erzielbaren Vorteile sind dieselben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Prozess und mehrere den Prozess steuernde Komponenten,
- FIG 2: den inneren Aufbau eines redundanten Automatisierungssystems und
- FIG 3 und 4: Ablaufdiagramme.

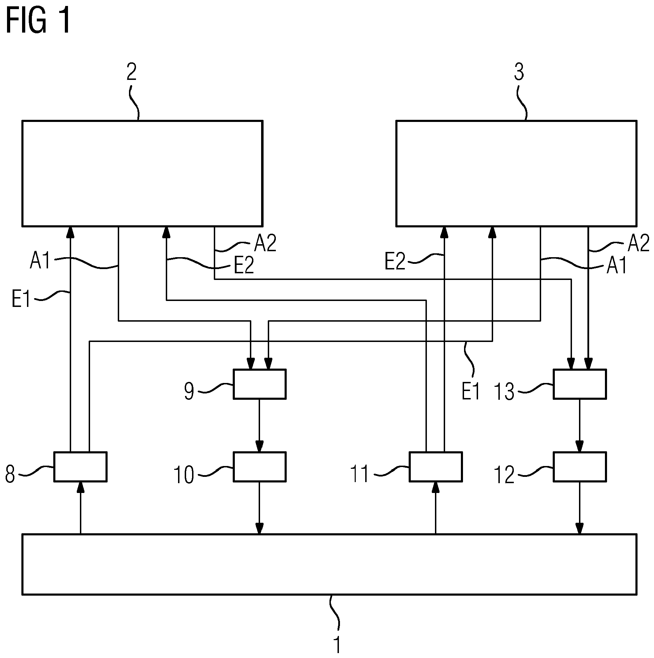

Gemäß FIG 1 soll mittels eines Automatisierungssystems ein industrieller technischer Prozess 1 gesteuert werden. Der industrielle technische Prozess 1 kann prinzipiell beliebiger Natur sein. Beispielsweise kann es sich um einen Prozess handeln, wie er in einer Verteileranlage für Briefe bei der Verteilung der Briefe abläuft.

Das Automatisierungssystem ist als redundantes Automatisierungssystem ausgebildet. Insbesondere umfasst das Automatisierungssystem zumindest eine erste Hardwareeinheit 2 und eine zweite Hardwareeinheit 3. gegebenenfalls können auch weitere, in den FIG nicht dargestellte Hardwareeinheiten vorhanden sein. Die Hardwareeinheiten 2, 3 sind eigenständig und unabhängig von der jeweils anderen Hardwareeinheit 3, 2 in der Lage, den Prozess 1 zu steuern. Sinn und Zweck dieser Redundanz ist, dass auch im Falle des Ausfalls einer der Hardwareeinheiten 2, 3 der Prozess 1 unter Steuerung durch die anderen Hardwareeinheiten 3, 2 ungestört weiter betrieben werden kann.

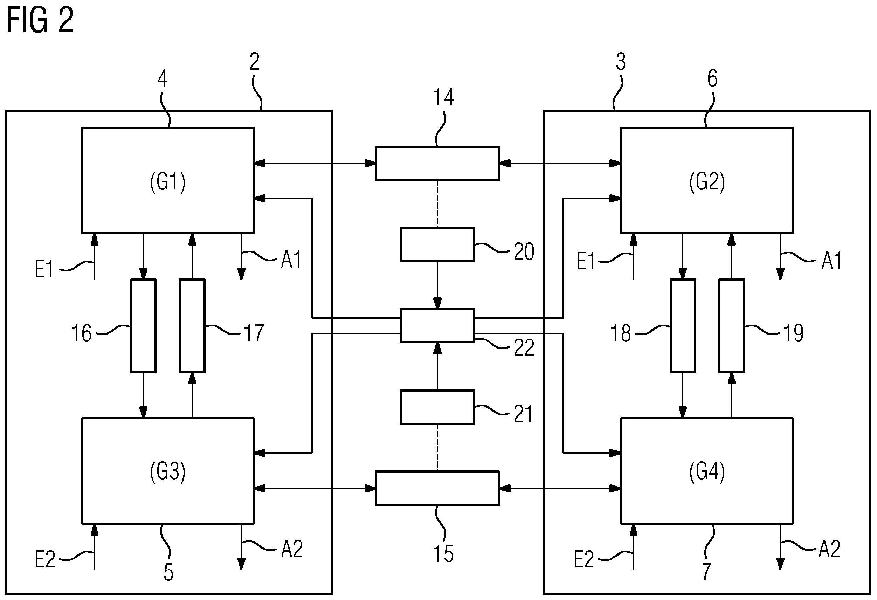

Die erste Hardwareeinheit 2 umfasst gemäß FIG 2 zumindest eine erste Prozessoreinheit 4 und eine zweite Prozessoreinheiten 5. Gegebenenfalls kann die erste Hardwareeinheit 2 auch weitere, in den FIG nicht dargestellte Prozessoreinheiten umfassen. In analoger Weise umfasst die zweite Hardwareeinheit 3 ebenfalls zumindest eine erste Prozessoreinheit 6 und eine zweite Prozessoreinheiten 7. Gegebenenfalls kann auch die zweite Hardwareeinheit 3 auch weitere, in den FIG nicht dargestellte Prozessoreinheiten umfassen.

Die erste Prozessoreinheit 4 der ersten Hardwareeinheit 2 führt eine erste Gruppe G1 von Tasks aus. In analoger Weise führt die erste Prozessoreinheit 6 der zweiten Hardwareeinheit 3 eine zweite Gruppe G2 von Tasks aus. In analoger Weise führt die zweite Prozessoreinheit 5 der ersten Hardwareeinheit 2 eine dritte Gruppe G3 von Tasks aus. In analoger Weise führt die zweite Prozessoreinheit 7 der zweiten Hardwareeinheit 3 eine vierte Gruppe G4 von Tasks aus.

Die verschiedenen Gruppen G1 bis G4 von Tasks korrespondieren paarweise miteinander.

Insbesondere nehmen die Tasks der ersten und der zweiten Gruppe G1, G2 mittels Sensoren 8 (siehe FIG 1) von dem Prozess 1 die gleichen Eingangssignale E1 entgegen. Beispielsweise können entsprechende Sensoren 8 vorhanden sein, welche die zugehörigen Sensorsignale des Prozesses 1 erfassen und die Eingangssignale E1 ausgeben. Hierbei ist es möglich, dass die Eingangssignale E1 von den Sensoren 8 direkt an die entsprechenden Gruppen G1, G2 übermittelt werden. "Direkt" bedeutet in diesem Zusammenhang, dass die Übermittlung an die entsprechende Prozessoreinheit 4, 6 von den entsprechenden Sensoren 8 aus erfolgt, nicht aber unter Zwischenschaltung einer anderen Prozessoreinheit 4 bis 7. Alternativ ist es möglich, dass die Eingangssignale E1 von den Sensoren 8 indirekt an die entsprechenden Gruppen G1, G2 übermittelt werden. "Indirekt" bedeutet in diesem Zusammenhang, dass die Übermittlung an die entsprechende Prozessoreinheit 4, 6 von den entsprechenden Sensoren 8 aus unter Zwischenschaltung einer anderen Prozessoreinheit 4 bis 7 erfolgt.

Weiterhin ermitteln die Tasks der ersten und der zweiten Gruppe G1, G2 die gleichen Ausgangssignale A1 für den Prozess 1 und stellen die von ihnen jeweils ermittelten Ausgangssignale A1 für den Prozess 1 bereit. An den Prozess 1 geben jedoch nur entweder die Tasks der ersten Gruppe G1 oder die Tasks der zweiten Gruppe G2 ihre Ausgangssignale A1 aus. Beispielsweise können die Tasks der ersten und der zweiten Gruppe G1, G2 die Ausgangssignale A1 zwar beide an eine Umschalteinrichtung 9 (siehe FIG 1) übermitteln, die Umschalteinrichtung 9 leitet jedoch nur die Ausgangssignale A1 der Tasks einer der beiden Gruppen G1, G2 an Aktoren 10 und damit an den Prozess 1 weiter.

Nur eine der beiden Gruppen G1, G2 ist damit aktiv in dem Sinne, dass ihre Ausgangssignale A1 tatsächlich den Prozess 1 beeinflussen. Diese Gruppe - beispielsweise die Gruppe G1 - nimmt die Eingangssignale E1 direkt entgegen. Die andere Gruppe - beispielsweise die Gruppe G2 - kann die Eingangssignale E1 alternativ direkt von den Sensoren 8 oder indirekt über die andere Gruppe - gemäß dem Beispiel also die Gruppe G1 - entgegennehmen.

In völlig analoger Weise wirken auch die Tasks der dritten und der vierten Gruppe G3, G4 zusammen. Insbesondere nehmen auch die Tasks der dritten und der vierten Gruppe G3, G4 von Sensoren 11 von dem Prozess 1 direkt oder indirekt die gleichen Eingangssignale E2 entgegen, ermitteln die gleichen Ausgangssignale A2 für den Prozess 1 und stellen die Ausgangssignale A2 für den Prozess 1 bereit. Jedoch geben nur entweder die Tasks der dritten Gruppe G3 oder die Tasks der vierten Gruppe G4 ihre Ausgangssignale A2 an Aktoren 12 und damit an den Prozess 1 aus. Wie zuvor kann auch hier zu diesem Zweck eine entsprechende Umschalteinrichtung 13 vorhanden sein.

Die Aktoren 12 sind von den Aktoren 10 verschiedene Aktoren. Auch die Umschalteinrichtung 13 ist eine von der Umschalteinrichtung 9 verschiedene Umschalteinrichtung. In analoger Weise können auch die Sensoren 11 von den Sensoren 8 verschiedene Sensoren sein. Es kann sich jedoch - vollständig oder teilweise - auch um dieselben Sensoren handeln.

Aufgrund der Verwertung der Eingangssignale E1, E2 durch beide Hardwareeinheiten 2, 3 und die Ermittlung der Ausgangssignale A1, A2 durch beide Hardwareeinheiten 2, 3 ist es möglich, dass bei einem Ausfall einer der beiden Hardwareeinheiten 2, 3 die von den Prozessoreinheiten 4 bis 7 der jeweils anderen Hardwareeinheit 3, 2 ausgeführten Gruppen G1 bis G4 von Tasks weiterhin ihre Ausgangssignale A1, A2 an den Prozess 1 ausgeben. Bei einem Ausfall der ersten Hardwareeinheit 2 sind dies die Tasks der zweiten und der vierten Gruppe G2, G4, bei einem Ausfall der zweiten Hardwareeinheit 3 die Tasks der ersten und der dritten Gruppe G1, G3.

Um eine ordnungsgemäße Steuerung des Prozesses 1 gewährleisten zu können, müssen die von den Hardwareeinheiten 2, 3 ausgeführten Gruppen G1 bis G4 von Tasks miteinander synchronisiert sein. Dies ist insbesondere erforderlich, um im Falle eines Ausfalls einer der beiden Hardwareeinheiten 2, 3 ein ordnungsgemäßes Umschalten der aktiven Gruppen G1 bis G4 bewirken zu können.

Um die erforderliche Synchronisierung gewährleisten zu können, umfasst das Automatisierungssystem eine erste Kommunikationsverbindung 14. Über die erste Kommunikationsverbindung 14 synchronisieren sich die Tasks der ersten und der zweiten Gruppe G1, G2. Weiterhin umfasst das Automatisierungssystem eine zweite Kommunikationsverbindung 15. Über die zweite Kommunikationsverbindung 15 synchronisieren sich die Tasks der dritten und der vierten Gruppe G3, G4. Die Synchronisierung kann - bezogen auf die jeweilige Kommunikationsverbindung 14, 15 - beispielsweise auf die gleiche Art und Weise erfolgen, wie sie detailliert in der EP 2 657 797 A1 und in der EP 2 667 269 A1 beschrieben sind.

Die erste Kommunikationsverbindung 14 und die zweite Kommunikationsverbindung 15 können je Kommunikationsrichtung je einen Stream aufweisen. Alternativ ist es möglich, dass pro Kommunikationsverbindung 14, 15 oder pro Kommunikationsrichtung jeweils nur ein einziger Stream vorhanden ist, so dass sich im Ergebnis nur zwei Streams ergeben. Es ist sogar möglich, die beiden Kommunikationsverbindungen 14, 15 für beide Kommunikationsrichtungen zu einem einzigen Stream zusammenzufassen.

Weiterhin tauschen die auf derselben Hardwareeinheit 2, 3 abgearbeiteten Gruppen G1 bis G4 von Tasks auch untereinander Daten aus. Dies wird nachstehend in Verbindung mit der ersten Hardwareeinheit 2 erläutert.

Zum Austausch der Daten speichern die Tasks der ersten Gruppe G1 in einen ersten Zwischenspeicher 16 diejenigen Daten ein, welche an die Tasks der dritten Gruppe G3 übermittelt werden sollen. Die Tasks der dritten Gruppe G3 lesen die in den ersten Zwischenspeicher 16 eingespeicherten Daten aus dem ersten Zwischenspeicher 16 aus. In analoger Weise speichern die Tasks der dritten Gruppe G3 in einen zweiten Zwischenspeicher 17 diejenigen Daten ein, welche an die Tasks der ersten Gruppe G1 übermittelt werden sollen. Die Tasks der ersten Gruppe G1 lesen die in den zweiten Zwischenspeicher 17 eingespeicherten Daten aus dem zweiten Zwischenspeicher 17 aus. Die Zwischenspeicher 16, 17 dienen also jeweils der unidirektionalen Übermittlung von Daten von den Tasks der ersten Gruppe G1 zu den Tasks der dritten Gruppe G3. In den ersten Zwischenspeicher 16 werden also ausschließlich von den Tasks der ersten Gruppe G1 Daten eingeschrieben und ausschließlich von den Tasks der dritten Gruppe G3 Daten ausgelesen. Umgekehrt werden in den zweiten Zwischenspeicher 17 ausschließlich von den Tasks der dritten Gruppe G3 Daten eingeschrieben und ausschließlich von den Tasks der ersten Gruppe G1 Daten ausgelesen. Die Zwischenspeicher 16, 17 können beispielsweise als FIFO-Speicher (FIFO = first in - first out) ausgebildet sein.

Es kann im Einzelfall geschehen, dass die Tasks der dritten oder der ersten Gruppe G3, G1 aus dem jeweiligen Zwischenspeicher 16, 17 Daten auslesen wollen, die von den Tasks der ersten oder der dritten Gruppe G1, G3 noch nicht in den jeweiligen Zwischenspeicher 16, 17 eingespeichert worden sind. In diesem Fall warten die Tasks der betroffenen Gruppe G3, G1 das Einspeichern der entsprechenden Daten in den entsprechenden Zwischenspeicher 16, 17 ab.

Für die zweite Hardwareeinheit 3 gelten völlig analoge Ausführungen. Die erforderlichen Zwischenspeicher sind in FIG 2 mit dem Bezugszeichen 18 und 19 versehen.

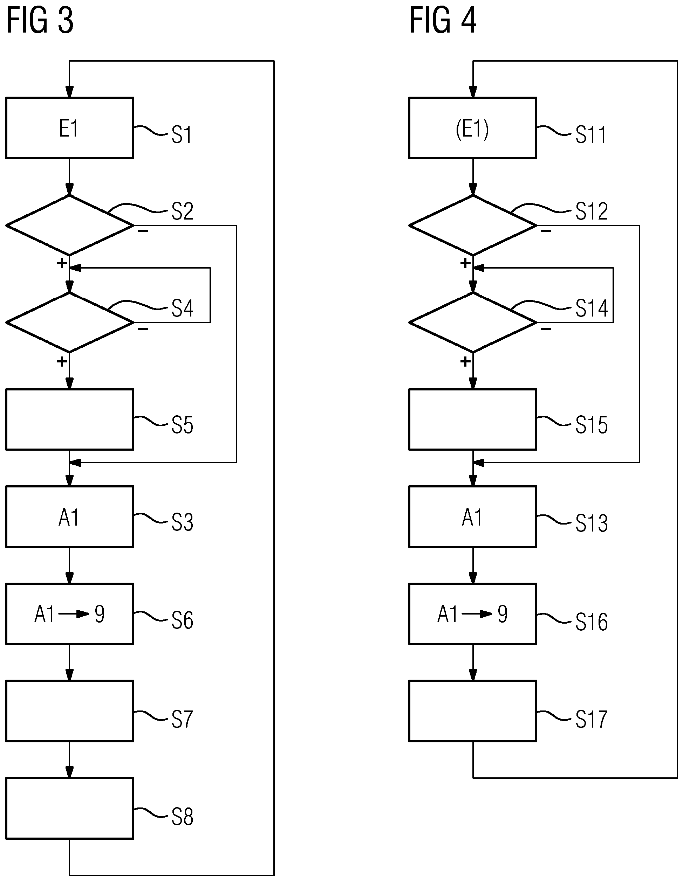

Die Betriebsweise einer der aktiven Gruppen G1 bis G4 von Tasks wird nachstehend in Verbindung mit FIG 3 näher erläutert, die Betriebsweise einer der nicht aktiven Gruppen G1 bis G4 in Verbindung mit FIG 4. Hierbei wird nachstehend angenommen, dass von den beiden Gruppen G1 und G2 die Gruppe G1 die aktive Gruppe ist, die Gruppe G2 die nicht aktive Gruppe.

Gemäß FIG 3 nimmt die aktive Gruppe G1 in einem Schritt S1 - und zwar direkt von den Sensoren 8 - ihre Eingangssignale E1 entgegen. In einem Schritt S2 prüft die aktive Gruppe G1, ob sie Daten von der dritten Gruppe G3 benötigt. Wenn dies nicht der Fall ist, geht die aktive Gruppe G1 direkt zu einem Schritt S3 über. Wenn die aktive Gruppe G1 hingegen Daten von der dritten Gruppe G3 benötigt, prüft die aktive Gruppe G1 in einem Schritt S4, ob die benötigten Daten im zweiten Zwischenspeicher 17 gespeichert sind. Wenn dies nicht der Fall ist, wird der Schritt S4 wiederholt, bis die Daten eingespeichert sind. Anderenfalls liest die aktive Gruppe G1 die entsprechenden Daten in einem Schritt S5 aus dem zweiten Zwischenspeicher 17 aus und geht sodann zum Schritt S3 über. Im Schritt S3 ermittelt die aktive Gruppe G1 die Ausgangssignale A1 für den Prozess 1. Sie berücksichtigt hierbei, soweit erforderlich, die Eingangssignale E1 und die von der dritten Gruppe G3 übermittelten Daten. Die ermittelten Ausgangssignale A1 stellt die aktive Gruppe G1 in einem Schritt S6 für den Prozess 1 bereit. Insbesondere kann im Schritt S6 eine Übermittlung an die Umschalteinrichtung 9 erfolgen. In einem Schritt S7 schreibt die aktive Gruppe G1 diejenigen Daten, welche an die dritte Gruppe G3 übermittelt werden sollen, in den ersten Zwischenspeicher 16 ein. In einem Schritt S8 führt die aktive Gruppe G1 diejenigen Aufgaben aus, die von ihrer Seite im Rahmen der Synchronisierung mit der nicht aktiven Gruppe G2 erforderlich sind. Die Maßnahmen des Schrittes S8 können insbesondere auch das Übermitteln der Eingangssignale E1 an die nicht aktive Gruppe G2 umfassen. Weitere Details zur Vorgehensweise finden sich in der erwähnten EP 2 657 797 A1. Nach der Ausführung des Schrittes S8 geht die aktive Gruppe G1 wieder zum Schritt S1 zurück.

Gemäß FIG 4 führt die nicht aktive Gruppe G2 in einem Schritt S11 diejenigen Aufgaben aus, die von ihrer Seite im Rahmen der Synchronisierung mit der aktiven Gruppe G1 erforderlich sind. Die Maßnahmen des Schrittes S11 können insbesondere das Entgegennehmen der Eingangssignale E1 von der aktiven Gruppe G1 umfassen. Gegebenenfalls kann zusätzlich auch eine Quittierung an die aktive Gruppe G1 zurück gemeldet werden. Auch hier finden sich weitere Details zur Vorgehensweise in der erwähnten EP 2 657 797 A1. In einem Schritt S12 prüft die nicht aktive Gruppe G2, ob sie Daten von der vierten Gruppe G4 benötigt. Wenn dies nicht der Fall ist, geht die nicht aktive Gruppe G2 direkt zu einem Schritt S13 über. Wenn die nicht aktive Gruppe G1 hingegen Daten von der vierten Gruppe G4 benötigt, prüft die nicht aktive Gruppe G2 in einem Schritt S14, ob die benötigten Daten im zweiten Zwischenspeicher 19 der zweiten Hardwareeinheit 3 gespeichert sind. Wenn dies nicht der Fall ist, wird der Schritt S14 wiederholt, bis die Daten eingespeichert sind. Anderenfalls liest die nicht aktive Gruppe G2 die entsprechenden Daten in einem Schritt S15 aus dem zweiten Zwischenspeicher 19 der zweiten Hardwareeinheit 3 aus und geht sodann zum Schritt S13 über. Im Schritt S13 ermittelt die nicht aktive Gruppe G2 die Ausgangssignale A1 für den Prozess 1. Sie berücksichtigt hierbei, soweit erforderlich, die Eingangssignale E1 und die von der vierten Gruppe G4 übermittelten Daten. Die ermittelten Ausgangssignale A1 stellt die nicht aktive Gruppe G2 in einem Schritt S16 für den Prozess 1 bereit. Insbesondere kann eine Übermittlung an die Umschalteinrichtung 9 erfolgen. In einem Schritt S17 schreibt die nicht aktive Gruppe G2 diejenigen Daten, welche an die vierte Gruppe G4 übermittelt werden sollen, in den ersten Zwischenspeicher 18 der zweiten Hardwareeinheit 3 ein.

Analoge Ausführungen gelten auch für die aktive und die nicht aktive Gruppe der beiden Gruppen G3 und G4.

Im Regelfall arbeiten beide Hardwareeinheiten 2, 3 ordnungsgemäß. Es ist möglich, dass in diesem Fall, in dem also weder die erste noch die zweite Hardwareeinheit 2, 3 ausfallen, die Festlegung, welche Tasks ihre Ausgangssignale A1, A2 an den gesteuerten industriellen Prozess 1 ausgeben, statisch beibehalten wird. Beispielsweise ist es möglich, zunächst die Gruppen G1 und G3 von Tasks als aktive Gruppen festzulegen und diese Festlegung beizubehalten, bis die erste Hardwareeinheit 2 ausfällt. Danach übernehmen die Gruppen G2 und G4 von Tasks die Rolle von aktiven Gruppen von Tasks. Wenn zu einem späteren Zeitpunkt die erste Hardwareeinheit 2 wieder funktionsfähig ist, sind die von ihr ausgeführten Gruppen G1, G3 von Tasks nicht aktive Gruppen. Dieser Zustand wird wieder statisch beibehalten, bis die zweite Hardwareeinheit 3 ausfällt.

Diese Ausgestaltung ist zwar möglich, jedoch unter dem Gesichtspunkt der Kommunikationsbelastung der Kommunikationsverbindungen 14, 15 suboptimal. Denn insbesondere ist der Umfang an Daten, der von den aktiven Gruppen von Tasks an die nicht aktiven Gruppen von Tasks übermittelt werden muss, erheblich größer als der Umfang an Daten, der von den nicht aktiven Gruppen von Tasks an die aktiven Gruppen von Tasks zurück übermittelt werden muss. Besser ist es daher, die aktiven Gruppen von Tasks auf beide Hardwareeinheiten 2, 3 aufzuteilen. Wenn also weder die erste noch die zweite Hardwareeinheit 2, 3 ausfallen, geben vorzugsweise entweder die Tasks der ersten und der vierten Gruppe G1, G4 oder die Tasks der zweiten und der dritten Gruppe G2, G3 ihre Ausgangssignale A1, A2 an den Prozess 1 aus.

Noch besser ist es, wenn entsprechend der Darstellung in FIG 2 mittels Erfassungseinrichtungen 20, 21 erfasst wird, in welchem Ausmaß Daten von der ersten Hardwareeinheit 2 zur zweiten Hardwareeinheit 3 übermittelt werden und in welchem Ausmaß Daten von der zweiten Hardwareeinheit 3 zur ersten Hardwareeinheit 2 übermittelt werden. In diesem Fall können die ermittelten Ausmaße von den Erfassungseinrichtungen 20, 21 an eine Festlegungseinrichtung 22 übermittelt werden. Die Festlegungseinrichtung 22 bestimmt in diesem Fall dynamisch, welche der Tasks ihre Ausgangssignale A1, A2 an den Prozess 1 ausgeben. Soweit erforderlich, kann die Festlegungseinrichtung 22 zu diesem Zweck die Umschalteinrichtungen 9, 13 entsprechend ansteuern. Die Festlegungseinrichtung 22 berücksichtigt bei der Ermittlung zum einen - selbstverständlich -, ob die Hardwareeinheiten 2, 3 ordnungsgemäß arbeiten. Wenn eine der Hardwareeinheiten 2, 3 nicht ordnungsgemäß arbeitet, kann sie bei der Zuordnung der aktiven Gruppen von Tasks nicht berücksichtigt werden. In dem Ausmaß, in dem die Hardwareeinheiten 2, 3 ordnungsgemäß arbeiten, berücksichtigt die Festlegungseinrichtung 22 bei der genannten Bestimmung jedoch die erfassten Ausmaße. Die Festlegungseinrichtung 22 verteilt die aktiven Gruppen G1 bis G4 derart auf die Hardwareeinheiten 2, 3, dass die verfügbare Bandbreite aller Kommunikationsverbindungen 14, 15 optimal ausgenutzt wird.

Es kann somit für jedes Paar von Gruppen G1 bis G4 - beispielsweise die beiden Gruppen G1 und G2 - individuell und einzeln bestimmt werden, welche Gruppe G1 bis G4 des jeweiligen Paares die aktive Gruppe und welche demzufolge die nicht aktive Gruppe ist.

Die vorliegende Erfindung wurde obenstehend in Verbindung mit zwei Hardwareeinheiten 2, 3 sowie in Verbindung mit zwei Prozessoreinheiten 4 bis 7 pro Hardwareeinheit 2, 3 erläutert. Die Vorgehensweise ist jedoch ohne weiteres auch auf mehr als zwei Hardwareeinheiten 2, 3 und/oder mehr als zwei Prozessoreinheiten 4 bis 7 pro Hardwareeinheit 2, 3 erweiterbar. Insbesondere bei mehr als zwei Prozessoreinheiten 4 bis 7 pro Hardwareeinheit 2, 3 müssen zwischen jedem Paar von Prozessoreinheiten 4 bis 7 der jeweiligen Hardwareeinheit 2, 3 zum Datenaustausch innerhalb der jeweiligen Hardwareeinheit 2, 3 je zwei Zwischenspeicher 16 bis 19 eingerichtet werden. Weiterhin muss in diesem Fall die Anzahl an Kommunikationsverbindungen 14, 15 entsprechend vergrößert werden. Bei mehr als zwei Hardwareeinheiten 2, 3 müssen die Kommunikationsverbindungen 14, 15 zwischen allen Paaren von Hardwareeinheiten 2, 3 eingerichtet werden.

Zusammengefasst betrifft die vorliegende Erfindung somit folgenden Sachverhalt:
Mehrere Hardwareeinheiten 2, 3 eines redundanten Automatisierungssystems umfassen jeweils mehrere Prozessoreinheiten 4 bis 7. Die Prozessoreinheiten 4 bis 7 führen jeweils eine Gruppe G1 bis G4 von Tasks aus. Auf verschiedenen Hardwareeinheiten 2, 3 ausgeführte Gruppen G1 bis G4 von Tasks nehmen von einem gesteuerten industriellen Prozess 1 direkt oder indirekt die gleichen Eingangssignale E1, E2 entgegen und ermitteln die gleichen Ausgangssignale A1, A2 für den gesteuerten industriellen Prozess 1. Es geben jedoch nur die Tasks jeweils einer der auf verschiedenen Hardwareeinheiten 2, 3 ausgeführten Gruppen G1 bis G4 ihre Ausgangssignale A1, A2 an den gesteuerten industriellen Prozess 1 aus. Die auf verschiedenen Hardwareeinheiten 2, 3 ausgeführten Gruppen G1 bis G4 synchronisieren sich miteinander über eine jeweilige Kommunikationsverbindung 14, 15. Die auf derselben Hardwareeinheit 2, 3 ausgeführten Gruppen G1 bis G4 von Tasks tauschen paarweise miteinander über ein jeweiliges Paar von Zwischenspeichern 16 bis 19 Daten aus.

Die vorliegende Erfindung weist viele Vorteile auf. Insbesondere ist es möglich, die bekannten, vorteilhaften Vorgehensweisen der EP 2 657 797 A1 und der EP 2 667 269 A1 auch bei Hardwareeinheiten 2, 3 mit jeweils mehreren Prozessoreinheiten 4 bis 7 einzusetzen. Weiterhin ist es möglich, die aktiven Gruppen G1 bis G4 von Tasks individuell auf die einzelnen Prozessoreinheiten 4 bis 7 zu verteilen. Dadurch verbessert sich insbesondere das Fehlerverhalten. Beispielsweise führen einzelne Fehler nur zu einem Stopp der jeweiligen Gruppe G1 bis G4 von Tasks, nicht aber zu einem Stopp aller von der jeweiligen Hardwareeinheit 2, 3 ausgeführten Tasks. Bei entsprechender Zuordnung der Tasks zu den Gruppen G1 bis G4 können weiterhin beispielsweise die Prozesssteuerung und die Kommunikation nach außen entkoppelt werden. Die Paare von Gruppen G1 bis G4 von Tasks können unabhängig voneinander parametriert werden. Dies betrifft insbesondere die in der EP 2 657 797 A1 erläuterten Unterbrechungsstellen. Dadurch kann auf einfache Weise unterschiedlichen dynamischen Anforderungen Rechnung getragen werden. Die Übertragungskapazität der Kommunikationsverbindungen 14, 15 kann optimal genutzt werden. Die Reintegration nach der Behebung eines Ausfalls einer Hardwareeinheit 2, 3 wird vereinfacht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für ein redundantes Automatisierungssystem, das zumindest eine erste und eine zweite Hardwareeinheit (2, 3) umfasst, wobei die erste und die zweite Hardwareeinheit (2, 3) jeweils zumindest eine erste und eine zweite Prozessoreinheit (4 bis 7) umfassen,
- wobei die erste Prozessoreinheit (4) der ersten Hardwareeinheit (2) eine erste Gruppe (G1) von Tasks ausführt,
- wobei die erste Prozessoreinheit (6) der zweiten Hardwareeinheit (3) eine zweite Gruppe (G2) von Tasks ausführt,
- wobei die zweite Prozessoreinheit (5) der ersten Hardwareeinheit (2) eine dritte Gruppe (G3) von Tasks ausführt,
- wobei die zweite Prozessoreinheit (7) der zweiten Hardwareeinheit (3) eine vierte Gruppe (G4) von Tasks ausführt,
- wobei die Tasks der ersten und der zweiten Gruppe (G1, G2) von einem gesteuerten industriellen Prozess (1) direkt oder indirekt die gleichen Eingangssignale (E1) entgegennehmen und die gleichen Ausgangssignale (A1) für den gesteuerten industriellen Prozess (1) ermitteln, jedoch nur entweder die Tasks der ersten Gruppe (G1) oder die Tasks der zweiten Gruppe (G2) ihre Ausgangssignale (A1) an den gesteuerten industriellen Prozess (1) ausgeben,
- wobei die Tasks der dritten und der vierten Gruppe (G3, G4) von dem gesteuerten industriellen Prozess (1) direkt oder indirekt die gleichen Eingangssignale (E2) entgegennehmen und die gleichen Ausgangssignale (A2) für den gesteuerten industriellen Prozess (1) ermitteln, jedoch nur entweder die Tasks der dritten Gruppe (G3) oder die Tasks der vierten Gruppe (G4) ihre Ausgangssignale (A2) an den gesteuerten industriellen Prozess (1) ausgeben,
- wobei bei einem Ausfall der ersten Hardwareeinheit (2) stets die Tasks der zweiten und der vierten Gruppe (G2, G4) ihre Ausgangssignale (A1, A2) an den gesteuerten industriellen Prozess (1) ausgeben und bei einem Ausfall der zweiten Hardwareeinheit (3) stets die Tasks der ersten und der dritten Gruppe (G1, G3) ihre Ausgangssignale (A1, A2) an den gesteuerten industriellen Prozess (1) ausgeben,
- wobei die Tasks der ersten und der zweiten Gruppe (G1, G2) sich über eine erste Kommunikationsverbindung (14) und die Tasks der dritten und der vierten Gruppe (G3, G4) sich über eine zweite Kommunikationsverbindung (15) miteinander synchronisieren,
- wobei die Tasks der ersten Gruppe (G1) Daten in einen ersten Zwischenspeicher (16) der ersten Hardwareeinheit (2) einspeichern und die Tasks der dritten Gruppe (G3) die in den ersten Zwischenspeicher (16) der ersten Hardwareeinheit (2) eingespeicherten Daten aus dem ersten Zwischenspeicher (16) der ersten Hardwareeinheit (2) auslesen,
- wobei die Tasks der dritten Gruppe (G3) Daten in einen zweiten Zwischenspeicher (17) der ersten Hardwareeinheit (2) einspeichern und die Tasks der ersten Gruppe (G1) die in den zweiten Zwischenspeicher (17) der ersten Hardwareeinheit (2) eingespeicherten Daten aus dem zweiten Zwischenspeicher (17) der ersten Hardwareeinheit (2) auslesen,
- wobei die Tasks der zweiten Gruppe (G2) Daten in einen ersten Zwischenspeicher (18) der zweiten Hardwareeinheit (3) einspeichern und die Tasks der vierten Gruppe (G4) die in den ersten Zwischenspeicher (18) der zweiten Hardwareeinheit (3) eingespeicherten Daten aus dem ersten Zwischenspeicher (18) der zweiten Hardwareeinheit (3) auslesen und
- wobei die Tasks der vierten Gruppe (G4) Daten in einen zweiten Zwischenspeicher (19) der zweiten Hardwareeinheit (3) einspeichern und die Tasks der zweiten Gruppe (G2) die in den zweiten Zwischenspeicher (19) der zweiten Hardwareeinheit (3) eingespeicherten Daten aus dem zweiten Zwischenspeicher (19) der zweiten Hardwareeinheit (3) auslesen.

2. Betriebsverfahren nach Anspruch 1,
**dadurch gekennzeichnet,**
**dass** die Zwischenspeicher (16 bis 19) der Hardwareeinheiten (2, 3) als FIFO-Speicher ausgebildet sind.

3. Betriebsverfahren nach Anspruch 1 oder 2,
**dadurch gekennzeichnet,**
**dass** die Tasks der ersten bis vierten Gruppe (G1 bis G4) in dem Fall, dass von ihnen auszulesende Daten noch nicht in den jeweiligen Zwischenspeicher (16 bis 19) der jeweiligen Hardwareeinheit (2, 3) eingespeichert sind, das Einspeichern abwarten.

4. Betriebsverfahren nach Anspruch 1, 2 oder 3,
**dadurch gekennzeichnet,**
**dass** für den Fall, dass weder die erste noch die zweite Hardwareeinheit (2, 3) ausfallen, die Festlegung, welche Tasks ihre Ausgangssignale (A1, A2) an den gesteuerten industriellen Prozess (1) ausgeben, statisch beibehalten wird.

5. Betriebsverfahren nach Anspruch 4,
**dadurch gekennzeichnet,**
**dass** für den Fall, dass weder die erste noch die zweite Hardwareeinheit (2, 3) ausfallen, entweder die Tasks der ersten und der vierten Gruppe (G1, G4) oder die Tasks der zweiten und der dritten Gruppe (G2, G3) ihre Ausgangssignale (A1, A2) an den gesteuerten industriellen Prozess (1) ausgeben.

6. Betriebsverfahren nach Anspruch 1, 2 oder 3,
**dadurch gekennzeichnet,**
**dass** erfasst wird, in welchem Ausmaß Daten von der ersten Hardwareeinheit (2) zur zweiten Hardwareeinheit (3) übermittelt werden und in welchem Ausmaß Daten von der zweiten Hardwareeinheit (3) zur ersten Hardwareeinheit (2) übermittelt werden, und dass unter Berücksichtigung der erfassten Ausmaße dynamisch bestimmt wird, welche der Tasks ihre Ausgangssignale (A1, A2) an den gesteuerten industriellen Prozess (1) ausgeben.

7. Betriebsverfahren nach einem der obigen Ansprüche,
**dadurch gekennzeichnet,**
**dass** die erste Kommunikationsverbindung (14) und die zweite Kommunikationsverbindung (15) als getrennte Streams oder als einheitlicher Stream ausgebildet sind.

8. Redundantes Automatisierungssystem, das zumindest eine erste und eine zweite Hardwareeinheit (2, 3) umfasst, wobei die erste und die zweite Hardwareeinheit (2, 3) jeweils zumindest eine erste und eine zweite Prozessoreinheit (4 bis 7) umfassen,
- wobei die erste Hardwareeinheit (2) dazu ausgebildet ist, mittels ihrer ersten Prozessoreinheit (4) eine erste Gruppe (G1) von Tasks und mittels ihrer zweiten Prozessoreinheit (5) eine dritte Gruppe (G3) von Tasks auszuführen,
- wobei die zweite Hardwareeinheit (3) dazu ausgebildet ist, mittels ihrer ersten Prozessoreinheit (6) eine zweite Gruppe (G2) von Tasks und mittels ihrer zweiten Prozessoreinheit (7) eine vierte Gruppe (G4) von Tasks auszuführen,
- wobei die Tasks der ersten und der zweiten Gruppe (G1, G2) von einem gesteuerten industriellen Prozess (1) direkt oder indirekt die gleichen Eingangssignale (E1) entgegennehmen und die gleichen Ausgangssignale (A1) für den gesteuerten industriellen Prozess (1) ermitteln und für den gesteuerten industriellen Prozess (1) bereitstellen,
- wobei die Tasks der dritten und der vierten Gruppe (G3, G4) von dem gesteuerten industriellen Prozess (1) direkt oder indirekt die gleichen Eingangssignale (E2) entgegennehmen und die gleichen Ausgangssignale (A2) für den gesteuerten industriellen Prozess (1) ermitteln und für den gesteuerten industriellen Prozess (1) bereitstellen,
- wobei das redundante Automatisierungssystem eine erste Kommunikationsverbindung (14) umfasst, über die sich die Tasks der ersten und der zweiten Gruppe (G1, G2) miteinander synchronisieren, und eine zweite Kommunikationsverbindung (15) umfasst, über die sich die Tasks der dritten und der vierten Gruppe (G3, G4) miteinander synchronisieren,
- wobei die erste Hardwareeinheit (2) einen ersten Zwischenspeicher (16) aufweist, in den die Tasks der ersten Gruppe (G1) Daten einspeichern und aus dem die Tasks der dritten Gruppe (G3) die dort eingespeicherten Daten auslesen,
- wobei die erste Hardwareeinheit (2) einen zweiten Zwischenspeicher (17) aufweist, in den die Tasks der dritten Gruppe (G3) Daten einspeichern und aus dem die Tasks der ersten Gruppe (G1) die dort eingespeicherten Daten auslesen,
- wobei die zweite Hardwareeinheit (3) einen ersten Zwischenspeicher (18) aufweist, in den die Tasks der zweiten Gruppe (G2) Daten einspeichern und aus dem die Tasks der vierten Gruppe (G4) die dort eingespeicherten Daten auslesen, und
- wobei die zweite Hardwareeinheit (3) einen zweiten Zwischenspeicher (19) aufweist, in den die Tasks der vierten Gruppe (G4) Daten einspeichern und aus dem die Tasks der zweiten Gruppe (G2) die dort eingespeicherten Daten auslesen.

9. Redundantes Automatisierungssystem nach Anspruch 7,
**dadurch gekennzeichnet,**
**dass** die Zwischenspeicher (16 bis 19) der Hardwareeinheiten (2, 3) als FIFO-Speicher ausgebildet sind.

10. Redundantes Automatisierungssystem nach Anspruch 8 oder **9, dadurch gekennzeichnet,**
**dass** die Tasks der ersten bis vierten Gruppe (G1 bis G4) derart ausgebildet sind, dass die Tasks in dem Fall, dass von ihnen auszulesende Daten noch nicht in den jeweiligen Zwischenspeicher (16 bis 19) der jeweiligen Hardwareeinheit (2, 3) eingespeichert sind, das Einspeichern abwarten.

11. Redundantes Automatisierungssystem nach Anspruch 8, 9 oder 10, **dadurch gekennzeichnet,**
**dass** das Automatisierungssystem Erfassungseinrichtungen (20, 21) aufweist, von denen erfasst wird, in welchem Ausmaß Daten von der ersten Hardwareeinheit (2) zur zweiten Hardwareeinheit (3) übermittelt werden und in welchem Ausmaß Daten von der zweiten Hardwareeinheit (3) zur ersten Hardwareeinheit (2) übermittelt werden, und dass das Automatisierungssystem eine Festlegungseinrichtung (22) aufweist, der die erfassten Ausmaße zugeführt werden und die unter Berücksichtigung der erfassten Ausmaße dynamisch bestimmt, welche der Tasks ihre Ausgangssignale (A1, A2) an den gesteuerten industriellen Prozess (1) ausgeben.

12. Redundantes Automatisierungssystem nach einem der Ansprüche 8 bis 11,
**dadurch gekennzeichnet,**
**dass** die erste Kommunikationsverbindung (14) und die zweite Kommunikationsverbindung (15) als getrennte Streams oder als einheitlicher Stream ausgebildet sind.

## Claims

1. Operating method for a redundant automation system which comprises at least one first and one second hardware unit (2, 3), wherein the first and the second hardware unit (2, 3) each comprise at least one first and one second processor unit (4 to 7),
- wherein the first processor unit (4) of the first hardware unit (2) executes a first group (G1) of tasks,
- wherein the first processor unit (6) of the second hardware unit (3) executes a second group (G2) of tasks,
- wherein the second processor unit (5) of the first hardware unit (2) executes a third group (G3) of tasks,
- wherein the second processor unit (7) of the second hardware unit (3) executes a fourth group (G4) of tasks,
- wherein the tasks of the first and of the second group (G1, G2) receive directly or indirectly the same input signals (E1) from a managed industrial process (1) and determine the same output signals (A1) for the managed industrial process (1), but only either the tasks of the first group (G1) or the tasks of the second group (G2) output their output signals (A1) to the managed industrial process (1),
- wherein the tasks of the third and of the fourth group (G3, G4) receive directly or indirectly the same input signals (E2) from the managed industrial process (1) and determine the same output signals (A2) for the managed industrial process (1), but only either the tasks of the third group (G3) or the tasks of the fourth group (G4) output their output signals (A2) to the managed industrial process (1),
- wherein in the event of a failure of the first hardware unit (2) the tasks of the second group and of the fourth group (G2, G4) always output their output signals (A1, A2) to the managed industrial process (1) and in the event of a failure of the second hardware unit (3) the tasks of the first group and of the third group (G1, G3) always output their output signals (A1, A2) to the managed industrial process (1),
- wherein the tasks of the first and of the second group (G1, G2) synchronise with one another via a first communication link (14) and the tasks of the third and of the fourth group (G3, G4) synchronise with one another via a second communication link (15),
- wherein the tasks of the first group (G1) store data in a first intermediate storage unit (16) of the first hardware unit (2) and the tasks of the third group (G3) read out the data stored in the first intermediate storage unit (16) of the first hardware unit (2) from the first intermediate storage unit (16) of the first hardware unit (2),
- wherein the tasks of the third group (G3) store data in a second intermediate storage unit (17) of the first hardware unit (2) and the tasks of the first group (G1) read out the data stored in the second intermediate storage unit (17) of the first hardware unit (2) from the second intermediate storage unit (17) of the first hardware unit (2),
- wherein the tasks of the second group (G2) store data in a first intermediate storage unit (18) of the second hardware unit (3) and the tasks of the fourth group (G4) read out the data stored in the first intermediate storage unit (18) of the second hardware unit (3) from the first intermediate storage unit (18) of the second hardware unit (3), and
- wherein the tasks of the fourth group (G4) store data in a second intermediate storage unit (19) of the second hardware unit (3) and the tasks of the second group (G2) read out the data stored in the second intermediate storage unit (19) of the second hardware unit (3) from the second intermediate storage unit (19) of the second hardware unit (3),

2. Operating method according to claim 1,
**characterised in that**
the intermediate storage units (16 to 19) of the hardware units (2, 3) are designed as FIFO storage units.

3. Operating method according to claim 1 or 2,
**characterised in that**
the tasks of the first to fourth group (G1 to G4) wait for the save to take place if the data to be read out by said tasks has not yet been saved in the respective intermediate storage unit (16 to 19) of the respective hardware unit (2, 3).

4. Operating method according to claim 1, 2 or 3,
**characterised in that**
in the event that neither the first nor the second hardware unit (2, 3) fails, it is possible for the definition as to which tasks output their output signals (A1, A2) to the managed industrial process (1) to be statically maintained.

5. Operating method according to claim 4,
**characterised in that**
in the event that neither the first nor the second hardware unit (2, 3) fails, either the tasks of the first and of the fourth group (G1, G4) or the tasks of the second and of the third group (G2, G3) output their output signals (A1, A2) to the managed industrial process (1).

6. Operating method according to claim 1, 2 or 3,
**characterised in that**
the extent to which data is transmitted from the first hardware unit (2) to the second hardware unit (3) and the extent to which data is transmitted from the second hardware unit (3) to the first hardware unit (2) is captured, and taking into consideration the captured parameters it is determined dynamically which of the tasks output their output signals (A1, A2) to the managed industrial process (1).

7. Operating method according to one of the preceding claims,
**characterised in that**
the first communication link (14) and the second communication link (15) are embodied as separate streams or as one single stream.

8. Redundant automation system which comprises at least one first and one second hardware unit (2, 3), wherein the first and the second hardware unit (2, 3) each comprise at least one first and one second processor unit (4 to 7),
- wherein the first hardware unit (2) is designed to execute a first group (G1) of tasks by means of its first processor unit (4) and a third group (G3) of tasks by means of its second processor unit (5),
- wherein the second hardware unit (3) is designed to execute a second group (G2) of tasks by means of its first processor unit (6) and a fourth group (G4) of tasks by means of its second processor unit (7),
- wherein the tasks of the first and of the second group (G1, G2) receive directly or indirectly the same input signals (E1) from a managed industrial process (1) and determine the same output signals (A1) for the managed industrial process (1) and make these available to the managed industrial process (1),
- wherein the tasks of the third and of the fourth group (G3, G4) receive directly or indirectly the same input signals (E2) from the managed industrial process (1) and determine the same output signals (A2) for the managed industrial process (1) and make these available to the managed industrial process (1),
- wherein the redundant automation system comprises a first communication link (14) by means of which the tasks of the first and of the second groups (G1, G2) synchronise with one another, and a second communication link (15) by means of which the tasks of the third and of the fourth groups (G3, G4) synchronise with one another,
- wherein the first hardware unit (2) has a first intermediate storage unit (16) in which the tasks of the first group (G1) save data and from which the tasks of the third group (G3) read out the data saved there,
- wherein the first hardware unit (2) has a second intermediate storage unit (17) in which the tasks of the third group (G3) save data and from which the tasks of the first group (G1) read out the data saved there,
- wherein the second hardware unit (3) has a first intermediate storage unit (18) in which the tasks of the second group (G2) save data and from which the tasks of the fourth group (G4) read out the data saved there, and
- wherein the second hardware unit (3) has a second intermediate storage unit (19) in which the tasks of the fourth group (G4) save data and from which the tasks of the second group (G2) read out the data saved there,

9. Redundant automation system according to claim 7,
**characterised in that**
the intermediate storage units (16 to 19) of the hardware units (2, 3) are designed as FIFO storage units.

10. Redundant automation system according to claim 8 or 9,
**characterised in that**
the tasks of the first to fourth group (G1 to G4) are designed to wait for the save to take place if the data to be read out by said tasks has not yet been saved in the respective intermediate storage unit (16 to 19) of the respective hardware unit (2, 3).

11. Redundant automation system according to claim 8, 9 or 10,
**characterised in that**
the automation system has capturing devices (20, 21) from which the extent to which data is transmitted from the first hardware unit (2) to the second hardware unit (3) and the extent to which data is transmitted from the second hardware unit (3) to the first hardware unit (2) is captured, and the automation system has a definition device (22) which is fed with the captured parameters and taking into consideration the captured parameters it determines dynamically which of the tasks output their output signals (A1, A2) to the managed industrial process (1).

12. Redundant automation system according to one of claims 8 to 11,
**characterised in that**
the first communication link (14) and the second communication link (15) are embodied as separate streams or as one single stream.

## Revendications

1. Procédé pour faire fonctionner un système d'automatisation redondant, qui comprend au moins une première et une deuxième unités (2, 3) matérielles, la première et la deuxième unités (2, 3) matérielles comprenant chacune au moins une première et une deuxième unités (4 à 7) de processeur,
- dans lequel la première unité (4) de processeur de la première unité (2) matérielle effectue un premier groupe (G1) de tâches,
- dans lequel la première unité (6) de processeur de la deuxième unité (3) matérielle effectue un deuxième groupe (G2) de tâches,
- dans lequel la deuxième unité (5) de processeur de la première unité (2) matérielle effectue un troisième groupe (G3) de tâches,
- dans lequel la deuxième unité (7) de processeur de la deuxième unité (3) matérielle effectue un quatrième groupe (G4) de tâches,
- dans lequel les tâches du premier et du deuxième groupes (G1, G2) reçoivent d'un processus (1) industriel commandé, directement ou indirectement, les mêmes signaux (E1) d'entrée et déterminent les mêmes signaux (A1) de sortie pour le processus (1) industriel commandé, toutefois seulement, soit les tâches du premier groupe (Gl), soit les tâches du deuxième groupe (G2), envoient leurs signaux (A1) de sortie au processus (1) industriel commandé,
- dans lequel les tâches du troisième et du quatrième groupes (G3, G4) reçoivent du processus (1) industriel commandé, directement ou indirectement, les mêmes signaux (E2) d'entrée et déterminent, pour le processus (1) industriel commandé, les mêmes signaux (A2) de sortie, toutefois seulement, soit les tâches du premier groupe (G3), soit les tâches du quatrième groupe (G4), envoient leurs signaux (A2) de sortie au processus (1) industriel commandé,
- dans lequel, s'il se produit une panne de la première unité (2) matérielle, les tâches du deuxième et du quatrième groupes (G2, G4) envoient toujours leurs signaux (A1, A2) de sortie au processus (1) industriel commandé et, s'il se produit une panne de la deuxième unité (3) matérielle, les tâches du premier et du troisième groupes (G1, G3) envoient toujours leurs signaux (A1, A2) de sortie au processus (1) industriel commandé,
- dans lequel les tâches du premier et du deuxième groupes (G1, G2) sont synchronisées entre elles par une première liaison (14) de communication et les tâches du troisième et du quatrième groupe (G3, G4) sont synchronisées entre elles par une deuxième liaison (15) de communication,
- dans lequel les tâches du premier groupe (G1) mettent des données dans une première mémoire (16) tampon de la première unité (2) matérielle et les tâches du troisième groupe (G3) lisent dans la première mémoire (16) tampon de la première unité (2) matérielle les données mises dans la première mémoire (16) tampon de la première unité (2) matérielle,
- dans lequel les tâches du troisième groupe (G3) mettent des données dans une deuxième mémoire (17) tampon de la première unité (2) matérielle et les tâches du premier groupe (G1) lisent dans la deuxième mémoire (17) tampon de la première unité (2) matérielle les données mises dans la deuxième mémoire (17) tampon de la première unité (2) matérielle,
- dans lequel les tâches du deuxième groupe (G2) mettent des données dans une première mémoire (18) tampon de la deuxième unité (3) matérielle et les tâches du quatrième groupe (G4) lisent dans la première mémoire (18) tampon de la deuxième unité (3) matérielle les données mises dans la première mémoire (18) tampon de la deuxième unité (3) matérielle et
- dans lequel les tâches du quatrième groupe (G4) mettent des données dans une deuxième mémoire (19) tampon de la deuxième unité (3) matérielle et les tâches du deuxième groupe (G2) lisent dans la deuxième mémoire (19) tampon de la deuxième unité (3) matérielle les données mises dans la deuxième mémoire (19) tampon de la deuxième unité (3) matérielle.

2. Procédé suivant la revendication 1,
**caractérisé**
**en ce que** les mémoires (16 à 19) tampons des unités (2, 3) matérielles sont constituées en mémoires FIFO.

3. Procédé suivant la revendication 1 ou 2,
**caractérisé**
**en ce que** les tâches des premier à quatrième groupes (G1 à G4), dans le cas où des données qu'elles doivent lire ne sont pas encore mises dans les mémoires (16 à 19) tampons respectives de l'unité (2, 3) matérielle respective, attendent pour la mise en mémoire.

4. Procédé suivant les revendications 1, 2 ou 3,
**caractérisé**
**en ce que**, dans le cas où ni la première, ni la deuxième unités (2, 3) matérielles ne sont défaillantes, on conserve statiquement la fixation des tâches, qui envoient leurs signaux (A1, A2) de sortie au processus (1) industriel commandé.

5. Procédé suivant la revendication 4,
**caractérisé**
**en ce que** dans le cas où ni la première, ni la deuxième unités (2, 3) matérielles ne sont défaillantes, ou bien les tâches du premier et du quatrième groupes (G1, G4), ou bien les tâches du deuxième et du troisième groupes (G2, G3) envoient leurs signaux (A1, A2) de sortie au processus (1) industriel commandé.

6. Procédé suivant la revendication 1, 2 ou 3,
**caractérisé**
**en ce que** l'on détecte dans quelle mesure des données sont transmises de la première unité (2) matérielle à la deuxième unité (3) matérielle et dans quelle mesure des données sont transmises de la deuxième unité (3) matérielle à la première unité (2) matérielle et **en ce que**, en tenant compte des mesures détectées, on détermine dynamiquement celles des tâches, qui envoient ses signaux (A1, A2) de sortie au processus (1) industriel commandé.

7. Procédé suivant l'une des revendications précédentes,
**caractérisé**
**en ce que** la première liaison (14) de communication et la deuxième liaison (15) de communication sont constituées sous la forme de streams séparés ou sous la forme d'un stream unique.

8. Système d'automatisation redondant, qui comprend au moins une première et une deuxième unités (2, 3) matérielles, la première et la deuxième unités (2, 3) matérielles comprenant chacune au moins une première et une deuxième unités (4 à 7) de processeur,
- dans lequel la première unité (2) matérielle est constituée pour effectuer, au moyen de sa première unité (4) de processeur, un premier groupe (G1) de tâches et, au moyen de sa deuxième unité (5) de processeur, un troisième groupe (G3) de tâches,
- dans lequel la deuxième unité (3) matérielle est constituée pour effectuer, au moyen de sa première unité (6) de processeur, un deuxième groupe (G2) de tâches et, au moyen de sa deuxième unité (7) de processeur, un quatrième groupe (G4) de tâches,
- dans lequel les tâches du premier et du deuxième groupes (G1, G2) reçoivent d'un processus (1) industriel commandé, directement ou indirectement, les mêmes signaux (E1) d'entrée et déterminent les mêmes signaux (A1) de sortie pour le processus (1) industriel commandé, et les mettent à disposition du processus (1) industriel commandé,
- dans lequel les tâches du troisième et du quatrième groupes (G3, G4) reçoivent du processus (1) industriel commandé, directement ou indirectement, les mêmes signaux (E2) d'entrée et déterminent les mêmes signaux (A2) de sortie pour le processus (1) industriel commandé et les mettent à disposition du processus (1) industriel commandé,
- dans lequel les tâches du premier et du deuxième groupes (G1, G2) sont synchronisées entre elles par une première liaison (14) de communication et les tâches du troisième et du quatrième groupes (G3, G4) sont synchronisées entre elles par une deuxième liaison (15) de communication,
- dans lequel la première unité (2) matérielle a une première mémoire (16) tampon, dans laquelle les tâches du premier groupe (G1) mettent en mémoire des données et dans laquelle les tâches du troisième groupe (G3) lisent les données, qui y ont été mises en mémoire,
- dans lequel la première unité (2) matérielle a une deuxième mémoire (17) intermédiaire, dans laquelle les tâches du troisième groupe (G3) mettent en mémoire des données et dans laquelle les tâches du premier groupe (G1) lisent les données, qui y ont été mises en mémoire,
- dans lequel la deuxième unité (3) matérielle a une première mémoire (18) tampon, dans laquelle les tâches du deuxième groupe (G2) mettent en mémoire des données et dans laquelle les tâches du quatrième groupe (G4) lisent les données, qui y ont été mises en mémoire,
- dans lequel la deuxième unité (3) matérielle a une deuxième mémoire (19) tampon, dans laquelle les tâches du quatrième groupe (G4) mettent en mémoire des données et dans laquelle les tâches du deuxième groupe (G2) lisent les données, qui y ont été mises en mémoire.

9. Système d'automatisation redondant, suivant la revendication 7,
**caractérisé**
**en ce que** les mémoires (16 à 19) tampons des unités (2, 3) matérielles sont constituées en mémoires FIFO.

10. Système d'automatisation redondant, suivant la revendication 8 ou 9, **caractérisé**
**en ce que** les tâches du premier au quatrième groupes (G1 à G4) sont constituées de manière à ce que les tâches, dans le cas où des données qu'elles doivent lire n'ont pas encore été mises dans la mémoire (16 à 19) tampon respective de l'unité (2, 3) matérielle respective, attendent pour la mise en mémoire.

11. Système d'automatisation redondant, suivant la revendication 8, 9 ou 10, **caractérisé**
**en ce que** le système d'automatisation a des dispositifs (20, 21) de détection, par lesquels on détermine dans quelle mesure des données ont été transmises de la première unité (2) matérielle à la deuxième unité (3) matérielle et dans quelle mesure des données ont été transmises de la deuxième unité (3) matérielle à la première unité (2) matérielle et **en ce que** le dispositif d'automatisation a un dispositif (22) de fixation, auquel les mesures détectées sont envoyées et qui détermine dynamiquement, en tenant compte des mesures détectées, les tâches qui ont envoyé leurs signaux (A1, A2) de sortie au processus (1) industriel commandé.

12. Système d'automatisation redondant, suivant l'une des revendications 8 à 11,
**caractérisé**
**en ce que** la première liaison (14) de communication et la deuxième liaison (15) de communication sont constituées en streams séparés ou en stream unique.
